# EUROPÄISCHE PATENTSCHRIFT

(11) **EP 2 387 518 B1**
(45) Veröffentlichungstag und Bekanntmachung des Hinweises auf die Patenterteilung: **14.03.2018**
(21) Anmeldenummer: 10704117.0
(22) Anmeldetag: 19.01.2010
(51) Int. Cl.: B60R 21/23

(54) **FAHRZEUGINSASSEN-RÜCKHALTESYSTEM MIT EINEM AUFBLASBAREN GASSACK**
AIRBAG ARRANGEMENT FOR A VEHICLE OCCUPANT RESTRAINT SYSTEM
ENSEMBLE SAC GONFLABLE POUR UN SYSTÈME DE RETENUE DES OCCUPANTS D'UN VÉHICULE

(30) Priorität: 19.01.2009 DE 102009005696
(43) Veröffentlichungstag der Anmeldung: 23.11.2011
(73) Patentinhaber: Takata AG, 63743 Aschaffenburg (DE)
(72) Erfinder: HALLBAUER, Karsten, 89195 Staig (DE); SCHWANN, Martin, 89134 Blaustein (DE)
(74) Vertreter: Maikowski & Ninnemann Patentanwälte Partnerschaft mbB
(86) Internationale Anmeldenummer: PCT/EP2010/050567
(87) Internationale Veröffentlichungsnummer: WO 2010/081909

(56) Entgegenhaltungen:
- EP-A1- 1 743 811
- JP-A- 9 323 604
- JP-A- 2004 106 711
- US-A- 5 492 363
- US-A- 5 536 038

## Beschreibung

Die Erfindung betrifft ein Fahrzeuginsassen-Rückhaltesystem mit einem aufblasbaren Gassack nach den Oberbegriff des Anspruchs 1.

Es ist allgemein bekannt, einen Gassack eines Fahrzeuginsassen-Rückhaltesystems mit einer oder mehreren Ausströmöffnungen zu versehen, über die Gas zur Vermeidung eines zu großen Innendruckes aus dem Gassack abströmen kann. Gassäcke mit Ausströmöffnungen sind beispielsweise aus der WO 2007/009427 A1 bekannt.

Die US 5,536,038 A beschreibt einen Gassack, bei dem mittels eines relativ aufwändigen Gassackdesigns kreisförmige Ausströmöffnungen im Nahtbereich eines aus zwei Gewebelagen gebildeten Gassacks ausgebildet sind. Jede der Gewebelagen weist dabei halbkreisförmig ausgeschnittene Bereiche auf, die die kreisförmigen Ausströmöffnungen bilden. Im Bereich der Ausströmöffnungen ist die die Gewebelagen verbindende Naht unterbrochen. Eine durch eine unterbrochene Naht gebildete Ausströmöffnung ist des weiteren aus der JP 09011845 A bekannt.

Die DE 199 34 232 A1 beschreibt einen Gassack, bei dem eine Ausströmöffnung durch eine Unterbrechung einer Umfangsnaht bereitgestellt wird. Es ist des Weiteren im Bereich der Ausströmöffnung eine Reißnaht vorgesehen, die mit einem schwächeren Faden als der Faden der Umfangsnaht ausgeführt ist. Die JP 2004 106711 A offenbart auch einen Gassack mit einer Ausströmöffnung. Der vorliegenden Erfindung liegt die Aufgabe zugrunde, ein Fahrzeuginsassen-Rückhaltesystem mit einem aufblasbaren Gassack mit einer oder mehreren Ausströmöffnungen bereitzustellen, die sich durch ein vorteilhaftes Design auszeichnen.

Diese Aufgabe wird erfindungsgemäß durch ein Fahrzeuginsassen-Rückhaltesystem mit den Merkmalen des Anspruchs 1 gelöst. Ausgestaltungen der Erfindung sind in den Unteransprüchen angegeben.

Danach zeichnet sich die erfindungsgemäße Lösung durch einen Gassack mit mindestens einer Ausströmöffnung aus, die durch Unterbrechung einer Umfangsnaht gebildet ist, die eine erste Gewebelage und eine zweite Gewebelage des Gassacks entlang ihres Randes miteinander verbindet. Im unterbrochenen Bereich, der die Ausströmöffnung bildet, ist eine Zusatznaht vorgesehen, die die Ausströmöffnung vollständig verschließt. Die Zusatznaht ist dabei derart ausgestaltet, dass sie während des Aufblasvorgangs öffnet und damit die Ausströmöffnung vollständig freigibt. Insbesondere öffnet die Zusatznaht bei Vorliegen einer während eines Aufblasvorgangs eintretenden Bedingung, bei der es sich beispielsweise um das Erreichen eines bestimmten Innendrucks des Gassacks oder das Erreichen einer bestimmten Temperatur innerhalb des Gassacks handelt. Der Innendruck führt dabei zu einer Bewegung der Gassack-Gewebelagen zueinander.

Weiter ist vorgesehen, dass die Umfangsnaht zur Bildung einer Ausströmöffnung derart unterbrochen ist, dass sie auf beiden Seiten der Ausströmöffnung einen sich im wesentlichen senkrecht zum angrenzenden Rand des Gassacks erstreckenden Abschnitt ausbildet und jeweils am Rand des Gassacks endet. Hierdurch bildet die Ausströmöffnung im aufgeblasenen Zustand einen rohrförmigen oder zylindrischen Bereich aus. Die auf beiden Seiten der Ausströmöffnung entsprechend verlaufenden Umfangsnähte bilden dabei eine Art Kanal. Das Gas kann dadurch effektiv und ohne größere Verwirbelung an den Unterbrechungsstellen der Umfangsnaht aus der Ausströmöffnung ausströmen. Der Querschnitt des rohrförmigen oder zylindrischen Bereichs der Ausströmöffnung ist beispielsweise kreisförmig oder oval.

Die erfindungsgemäße Lösung ermöglicht es dabei, das Abströmen von Gas aus dem Gassack zu verzögern, bis sich beispielsweise ein bestimmter Innendruck im Gassack aufgebaut hat. Dieser initiale Druckaufbau kann erfindungsgemäß schneller erfolgen, als wenn die Ausströmöffnung von vornherein offen wäre, da durch den zeitweiligen Verschluss der Ausströmöffnung ein vorzeitiger Gasverlust verhindert wird. Gleichzeitig wird eine Lösung bereitgestellt, bei der das Risiko des Abdrückens der Ausströmöffnung durch den Fahrzeuginsassen oder intrudierende Fahrzeugkomponenten aufgrund der Ausbildung der Ausströmöffnung in der Umfangsnaht des Gassacks minimiert ist. Ein solches Abdrücken führte zu einem unerwünschten zu harten Insassenrückhalt.

Eine Umfangsnaht im Sinne der vorliegenden Erfindung ist jede Verbindung, auch eine klebende Verbindung, die mindestens eine erste Gewebelage und eine zweite Gewebelage entlang ihres Randes miteinander verbindet und dementsprechend im Wesentlichen parallel am oder in einem Abstand zum Rand bzw. zur Außenkontur des Gassacks verläuft. Die Umfangsnaht kann dabei aus unterschiedlichen Einzelnähten zusammengesetzt sein, die parallel und/oder aufeinanderfolgend verlaufen. Weiter ist es möglich, dass der Gassack mehr als zwei Gewebelagen aufweist. Beispielsweise ist eine vordere und eine hintere Gassackhülle jeweils durch eine doppelte Gewebelage gebildet, so dass insgesamt vier Gewebelagen vorliegen. Die Gewebelagen des Gassacks können aus einem beliebigen Gassackmaterial bestehen.

Die erfindungsgemäß vorgesehene Zusatznaht verschließt die Ausströmöffnung, d. h., dass die Ausströmöffnung vollständig verschlossen ist. Bei einem lediglich teilweisen Verschluss wird ein Gasaustritt bis zum Öffnen der Zusatznaht nicht verhindert, sondern lediglich reduziert. Auch dies führt zu einem beschleunigten Druckanstieg im Gassackinneren und damit zu einem früheren Aufbau einer Rückhaltekraft am Fahrzeuginsassen.

Unter einem "Öffnen" der Zusatznaht wird jede Art der Auflösung oder Beseitigung der Zusatznaht verstanden. Ein "Öffnen" der Zusatznaht umfasst dabei beispielsweise ein Reißen der Zusatznaht oder ein Schmelzen einer aus einem Kunststoff hergestellten Zusatznaht bei Vorliegen einer bestimmten Temperatur im Gassackinneren. Zur Herstellung der Zusatznaht können grundsätzlich sämtliche bekannte Nahtmaterialien und Nahtformen verwendet werden.

In einer Ausgestaltung der Erfindung ist die Zusatznaht derart ausgestaltet, dass sie öffnet, bevor ein in Normalposition sitzender rückzuhaltender Fahrzeuginsasse in Rückhaltekontakt mit dem Gassack tritt. Das Öffnen der Zusatznaht erfolgt also relativ kurze Zeit nach Beginn des Entfaltungsvorgangs und vor Erreichen des Maximums der Belastung. Hierdurch wird sichergestellt, dass die durch die Ausströmöffnung bereitgestellten Vorteile, nämlich das Verhindern eines zu großen Innendrucks und damit eines zu harten Insassenrückhalts, bereits eingetreten sind, wenn der rückzuhaltende Fahrzeuginsasse in Kontakt mit dem Gassack tritt.

In einer weiteren Ausgestaltung ist die Ausströmöffnung derart in der Umfangsnaht des Gassacks angeordnet, dass sie nicht in Kontakt mit einem rückzuhaltenden Fahrzeuginsassen oder mit intrudierenden Fahrzeugkomponenten treten kann. Hierzu ist die Ausströmöffnung bei einem als Seitengassack ausgebildeten Gassack beispielsweise an einem in Bezug auf die Fahrzeugrichtung vorderen Bereich des Gassacks ausgebildet. Auf diese Weise wird vermieden, dass die Ausströmöffnung durch den Fahrzeuginsassen abgedrückt und dadurch das Entweichen von Gas aus der Ausströmöffnung verhindert wird.

Die im Bereich einer Auslassöffnung realisierte Zusatznaht kann auf verschiedene Weise variiert werden, um das Öffnungsverhalten des Gassacks den Erfordernissen des Rückhalts anzupassen. Hierzu können zum einen unterschiedliche Formen der Zusatznaht vorgesehen sein. Beispielsweise kann mindestens eine Zusatznaht im wesentlichen parallel oder senkrecht zur Außenkontur des Gassacks im Bereich der Ausströmöffnung verlaufen. Des Weiteren kann die Zusatznaht die Ausströmöffnung vollständig oder lediglich teilweise verschließen. Sie kann gerade oder gebogen verlaufen und/oder an ihrem Rand abgerundet ausgebildet sein. Zum anderen können die Stichweite des Nahtbereiches und/oder die Parameter des die Reißnaht bildenden Fadens als weitere Abstimmungsparameter variiert bzw. eingestellt werden.

In einer weiteren Ausführungsvariante ist vorgesehen, dass die Zusatznaht die Umfangsnaht zumindest einmal schneidet. Hierdurch wird sichergestellt, dass zwischen der Zusatznaht und der Umfangsnaht kein Gas durchströmen und entweichen kann, noch während die Zusatznaht existiert. Erfindungsgemäß verläuft die Außenkontur des Gassacks im Bereich der Ausströmöffnung im Wesentlichen stetig geradlinig. Die Außenkante des Gassacks folgt somit auch im Bereich der Ausströmöffnung der Außenkontur, ohne dass der Gassack im Bereich der Ausströmöffnungen Aussparungen oder Einbuchtungen aufweist, wie es bei der US 5,536,038 A vorgesehen ist. Die einzelnen Gewebelagen des Gassacks sind somit zur Bildung einer Ausströmöffnung nicht mit Einbuchtungen oder Ausschneidungen versehen. Vielmehr liegen die Gewebelagen im Bereich der Ausströmöffnung im ausgebreiteten Zustand parallel aneinander, unter Ausbildung eines gemeinsamen Randbereichs, der der Außenkontur des Gassacks folgt und beispielsweis geradlinig ausgebildet ist.

Bei Aufblasen und Entfalten des Gassacks und nach Öffnen der Zusatznaht bildet die Ausströmöffnung eine kreisförmige oder zylindrische Form, in Abhängigkeit von der Ausgestaltung der Umfangsnaht angrenzend an die Ausströmöffnung.

Die erste und zweite Gewebelage, die durch die Umfangsnaht zur Ausbildung des Gassacks in ihrem Randbereich miteinander verbunden sind, können aus einem einzigen oder aus unterschiedlichen Gewebezuschnitten gebildet sein. So ist in einer Ausgestaltung der Erfindung vorgesehen, dass die beiden Gewebelagen durch zwei aufeinander geklappte Bereiche eines einzigen, symmetrischen Gewebezuschnitts gebildet sind. Ein solcher, symmetrischer Gewebezuschnitt wird auch als "Butterfly-Design" bezeichnet. Aufgrund des symmetrischen Zuschnitts können die Gassäcke rechts-links-gleich bis zur Faltung produziert werden, d. h. die Gassäcke können sowohl auf der rechten Seite als auch auf der linken Fahrzeugseite eingesetzt werden, was den Herstellungsprozess vereinfacht.

In einer alternativen Ausgestaltung sind die beiden Gewebelagen durch zwei gesonderte Gewebezuschnitte gebildet, die aufeinander gelegt und mittels der Umfangsnaht verbunden sind. Da bei dieser Ausgestaltung kein durch eine Falte gebildeter Randbereich vorliegt, sind die beiden Gewebelagen entlang ihres gesamten Umfanges miteinander verbunden (abgesehen von einer Öffnung für einen Gasgenerator oder einen Einfüllstutzen sowie abgesehen von den erfindungsgemäßen Ausströmöffnungen).

Eine weitere Ausgestaltung sieht vor, dass die Festigkeit der Zusatznaht in dem Sinne an eine OOP-Situation (OOP = "Out-Of-Position") angepasst ist, dass die Zusatznaht öffnet, bevor der Innendruck im Gassack OOP-kritisch wird. Die Zusatznaht ist also derart ausgestaltet, dass sie öffnet, bevor der Gassackdruck einen Wert erreicht, der für einen sich in einer OOP-Situation befindenden Fahrzeuginsassen ungünstig wäre.

Der Gassack kann mehrere Kammern aufweisen, wobei eine erfindungsgemäße, mit einer Zusatznaht versehene Ausströmöffnung in mindestens einer der Kammern realisiert ist.

Die Erfindung wird nachfolgend unter Bezugnahme auf die Figuren der Zeichnung anhand mehrerer Ausführungsbeispiele näher erläutert. Es zeigen:
- Fig. 1: ein erstes Ausführungsbeispiel eines Seitengassacks mit einer im Bereich einer Ausströmöffnung des Gassacks vorgesehenen Zusatznaht;
- Fig. 2: einen Gassackzuschnitt zur Herstellung eines Gassacks gemäß der Figur 1;
- Fig. 3: ein zweites Ausführungsbeispiel eines Seitengassacks mit einer im Bereich einer Ausströmöffnung des Gassacks vorgesehenen Zusatznaht; und
- Figuren 4A - 4T: mögliche Nahtverläufe einer Zusatznaht im Bereich einer Ausströmöffnung eines Gassacks.

Die Figuren betreffen einen Gassack eines Fahrzeuginsassen-Rückhaltesystems. Das Fahrzeuginsassen-Rückhaltesystem weist neben dem dargestellten Gassack weitere typische Elemente eines Fahrzeuginsassen-Rückhaltesystems auf, wie insbesondere einen Gasgenerator, Airbagsensoren und eine Steuervorrichtung. Des Weiteren kann das Rückhaltesystem in Abhängigkeit von der konkreten Implementierung Elemente wie einen Diffusor, eine Gaslanze und/oder ein Gehäuse oder eine andere Umhüllung aufweisen. Solche Elemente sind in den Figuren nicht gesondert dargestellt, da sie dem Fachmann bekannt sind.

Es wird weiter darauf hingewiesen, dass die im folgenden beschriebenen Gassäcke zwar als Seitenairbags ausgebildet sind. Entsprechende Ausströmöffnungen können jedoch ebenso in Gassäcken beliebiger anderen Airbags implementiert sein.

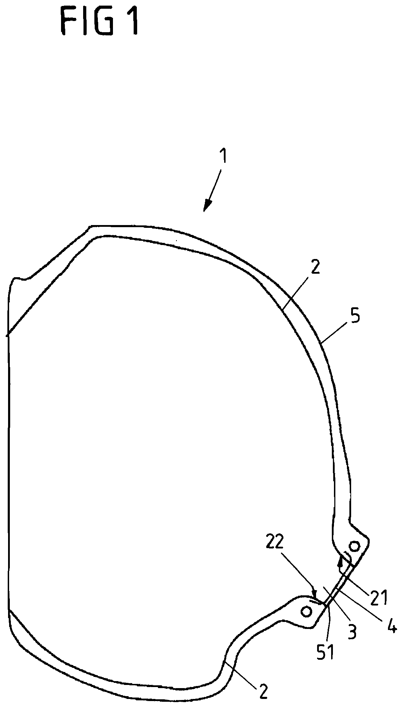

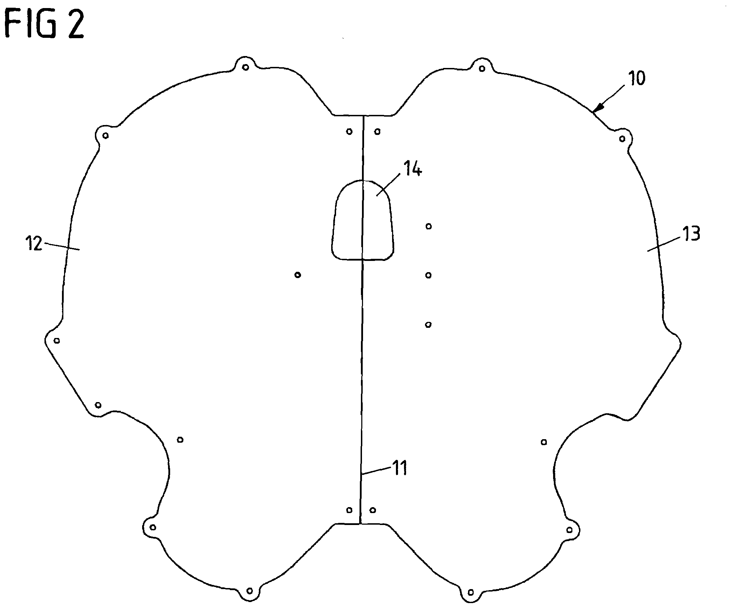

Die Figur 1 zeigt einen flach ausgebreiteten Gassack 1 eines Fahrzeuginsassen-Rückhaltesystems, der zwei Gewebelagen aufweist, die mittels einer Umfangsnaht 2 miteinander verbunden sind. Die Herstellung eines solchen Gassacks erfolgt beispielsweise unter Verwendung eines in der Figur 2 beispielhaft dargestellten achsensymmetrischen Designs eines Gassackzuschnitts 10, das auch als "Butterfly"-Design bezeichnet wird. Der in der Figur 2 dargestellte Gassackzuschnitt 10 weist zwei bezüglich einer Mittelachse 11 symmetrische Hälften 12, 13 auf. Der Gassack wird entlang der Mittelachse 11 einmal gefaltet, wobei aufgrund des symmetrischen Designs die beiden Hälften 12, 13 des Gassackzuschnitts 10 einschließlich ihrer Ränder aufeinander zu liegen kommen und eine gemeinsame Außenkante und damit Außenkontur 5 (vgl. Figur 1) bilden. Über die Umfangsnaht 2 werden die beiden aufeinandergelegten Gewebelagen 12, 13 des Gassackzuschnitts 10 entlang ihres Randes miteinander verbunden.

Der Gassackzuschnitt 10 der Figur 2 weist des Weiteren eine Öffnung 14 zur Einbringung eines Gasgenerators oder eines Gasgeneratorbereichs in den Gassack 1 auf. Die Befestigung des Gasgenerators am Gassack 1 kann dabei beispielsweise entsprechend den Figuren 7A bis 7E der WO 2008/129031 A2 erfolgen. Die Öffnung 14 ist in der schematischen Darstellung der Figur 1 nicht dargestellt, da sie für die vorliegende Erfindung nicht wesentlich ist.

Zur Ausbildung einer Ausströmöffnung ist die Umfangsnaht 2 in einem Bereich 3 unterbrochen ausgebildet, d.h. die Unterbrechung der Umfangsnaht 2 bildet die Ausströmöffnung 3. Die Umfangsnaht 2 ist zur Ausbildung der Ausströmöffnung 3 dabei lokal angrenzend an die Ausströmöffnung 3 derart geführt, dass sie von einem Verlauf im wesentlichen parallel zur Außenkante 5 des Gassacks 1 zu einem Verlauf im Wesentlichen senkrecht zur Außenkante des Gassacks 1 übergeht und an der Außenkante 5 des Gassacks im Wesentlichen im rechten Winkel endet. Dabei entstehen zwei im Wesentlichen parallele Abschnitte 21, 22 der Umfangsnaht 2, die die Ausströmöffnung 3 begrenzen und an der Außenkante 5 enden. Aufgrund des parallelen Verlaufs der Bereiche 21, 22 der Umfangsnaht 2 bildet die Ausströmöffnung 3 im aufgeblasenen Zustand einen rohrförmigen oder zylindrischen Bereich aus, dessen Länge von der Länge der parallelen Nahtbereiche 21, 22 abhängt. Auf diese Weise kann Gas effektiv und ohne größere Verwirbelung an den Unterbrechungsstellen der Umfangsnaht 2 aus der Ausströmöffnung 3 ausströmen.

Die im Wesentlichen parallelen Abschnitte 21, 22 weisen beispielsweise eine Länge auf, die im Bereich zwischen 2 mm und 50 mm, insbesondere im Bereich zwischen 5 mm und 35 mm liegt.

Es wird dabei darauf hingewiesen, dass die Art und Weise der Ausbildung der Ausströmöffnung 3 in der Figur 1 lediglich beispielhaft zu verstehen ist. Ebenso ist es beispielsweise denkbar, dass die Umfangsnaht 2 angrenzend an die Ausströmöffnung 3 lediglich unterbrochen ist, ohne von einem Verlauf im Wesentlichen parallel zu der Außenkontur 5 des Gassacks 1 abzuweichen. Dabei kann ggf. vorgesehen sein, dass die Umfangsnaht 2 jeweils an der Stelle, an der sie zur Bildung der Ausströmöffnung 3 endet, lokal verstärkt ist, um ein Ausreißen bei Ausströmen von Gas aus der Ausströmöffnung 3 sicher zu verhindern.

Die Außenkontur 5 des flach ausgebreiteten Gassacks 1 bildet im Bereich der Ausströmöffnung 3 einen geradlinigen Bereich 51 aus. Dies trägt weiter zu einer im wesentlichen zylindrischen Form der Ausblasöffnung 3 im aufgeblasenen Gassack bei.

Es ist vorgesehen, dass die Ausströmöffnung 3 durch eine Zusatznaht 4 verschlossen ist. Die Zusatznaht 4 verbindet dabei zumindest teilweise die beiden Gewebelagen des Gassacks 1 im Bereich der Ausströmöffnung 3 miteinander. Dies bewirkt einen zeitweiligen Verschluss der Gasausströmöffnung 3. Hierdurch wird ein vorzeitiger Gasverlust bei Befüllen des Gassacks 1 mit Gas eines Gasgenerators im Auslösefall vermieden. Ein Druckaufbau im Gassack kann auf diese Weise schneller erfolgen. Gleichzeitig ist die Zusatznaht 4 derart ausgebildet, dass sie während des Aufblasvorgangs reißt, insbesondere wenn ein bestimmter Innendruck und/oder eine bestimmte Innentemperatur im Gassack erreicht sind.

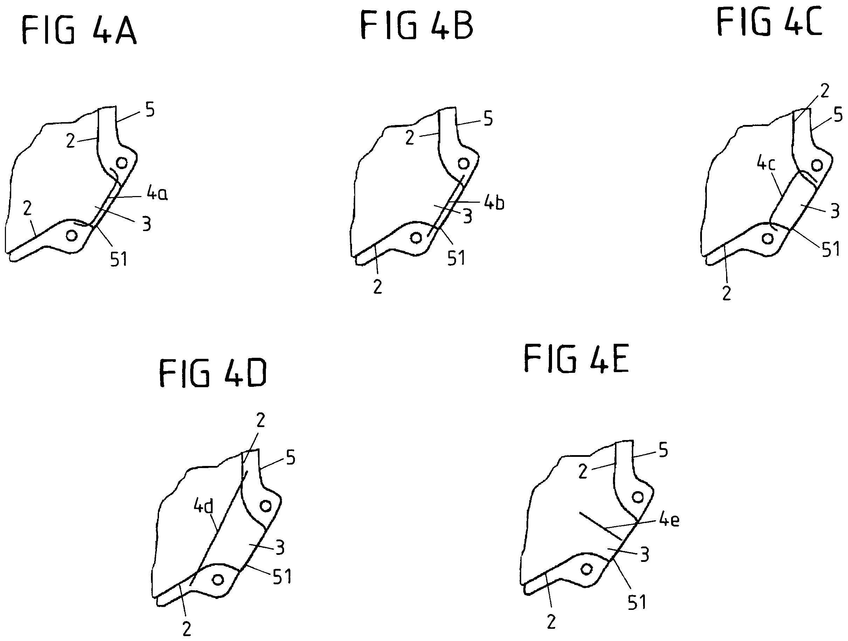

Die Reißfestigkeit der Zusatznaht bzw. der Zeitpunkt, zu dem die Zusatznaht während des Aufblasvorgangs reißt, kann durch bestimmte Abstimmungsparameter eingestellt werden. Eine solche Einstellung kann z. B. über die Nahtform erfolgen. Unterschiedliche Nahtformen werden anhand der Figuren 4A bis 4T weiter unten erläutert werden. Als weitere Abstimmungsparameter können für jede Nahtform zusätzlich die Stichbreite und die Fadendicke sowie das Fadenmaterial eingestellt werden.

Das Öffnen des Nahtbereichs über die Durchströmung der Naht und das Aufschmelzen des Fadens ist ebenfalls als Öffnungsparameter einsetzbar: die Zusatznaht ist dabei derart ausgebildet, dass sie die Ausströmöffnung nicht vollständig abdichtet, so dass durch die Zusatznaht das heiße Innengas des Gassacks gedrückt wird. Gleichzeitig besteht die Zusatznaht aus einem schmelzbaren Faden. Da die Gastemperatur höher als die Schmelztemperatur des Fadens der Zusatznaht ist, führt dies zu einem Schmelzen des Fadens und damit zu einer Öffnung der Zusatznaht. Über die Schmelztemperatur und die Dicke des Fadens sowie den Grad der Durchströmung der Naht kann der Zeitpunkt, zu dem die Zusatznaht während des Aufblasvorgangs öffnet, eingestellt werden.

Die erzielbare Rückhaltearbeit des aufgeblasenen Gassacks an der durch die Ausströmöffnung gebildeten Drossel ist proportional zur Menge des zur Verfügung stehenden Gases.

Bevorzugt ist die Zusatznaht derart ausgebildet, dass sie reißt und ein Abströmen von Gas aus dem sich entfaltenden Gassack erfolgt, bevor der Insasse Kontakt zum Gassack aufnimmt. Hierdurch wird sichergestellt, dass der rückzuhaltende Insasse nicht auf einen zu harten Gassack aufprallt. Es wird die mögliche maximale Rückhaltearbeit reduziert.

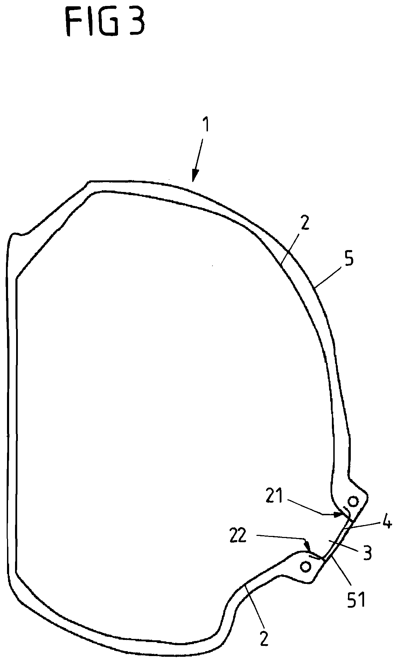

Die Figur 3 zeigt ein Gassackdesign, bei dem der Gassack aus zwei gesonderten Gassackzuschnitten hergestellt ist und nicht aus einem einzigen Gassackzuschnitt wie beim "Butterfly"-Design der Figur 1. Dementsprechend erstreckt sich die Umfangsnaht 2 entlang des gesamten Außenumfanges des Gassacks 1. Nicht dargestellt ist eine Öffnung zum Einführen eines Gasgenerators in den Gassack. Was die Ausgestaltung der Ausströmöffnung 3 und der Zusatznaht 4 angeht, ergeben sich keine Unterschiede zu der Ausgestaltung der Figur 1, so dass auf die diesbezüglichen Ausführungen verwiesen wird.

Die Figuren 4A bis 4T zeigen unterschiedliche Beispiele hinsichtlich des Verlaufs und der Form der Zusatznaht 4.

In der Figur 4A erstreckt sich die Zusatznaht 4a über die gesamte Breite der Ausströmöffnung 3. Sie verläuft dabei im Wesentlichen parallel zu der Außenkontur 51 des Gassacks im Bereich der Ausströmöffnung 3. Die Enden der Zusatznaht 4a sind in Richtung des Gassackinneren abgewinkelt. In der Figur 4B verläuft die Zusatznaht 4b über ihre gesamte Länge geradlinig und parallel zur Außenkontur 51 des Gassacks im Bereich der Ausströmöffnung 3. Die Ausströmöffnung 3 wird durch die Zusatznaht 4b ebenso wie bei der Figur 4A vollständig verschlossen.

Bei der Figur 4C verschließt die Zusatznaht 4c die Ausströmöffnung 3 wiederum vollständig. Die Zusatznaht 4c ist jedoch stärker von der Außenkante 51 des Gassacks beabstandet. Die Enden der Zusatznaht 4c sind dabei vom Gassackinneren weg gebogen. Die Figur 4D zeigt eine Zusatznaht 4d, die ähnlich wie bei der Figur 4B vollständig geradlinig verläuft, jedoch in größerem Abstand von der Außenkontur 51 des Gassacks angeordnet ist.

Bei den Ausgestaltungen der Figuren 4A bis 4D schneidet die Zusatznaht 4a, 4b, 4c, 4d jeweils die Umfangsnaht 2. Hierdurch wird ein gasdichter Verschluss der Ausströmöffnung 3 sichergestellt, so lange die Zusatznaht existiert.

Die Figur 4E zeigt ein Beispiel bei dem eine Zusatznaht 4e senkrecht zur Außenkante 51 des Gassacks im Bereich der Ausströmöffnung 3 verläuft. Dementsprechend wird die Ausströmöffnung 3 nicht vollständig verschlossen, sondern in ihrer Größe lediglich verkleinert.

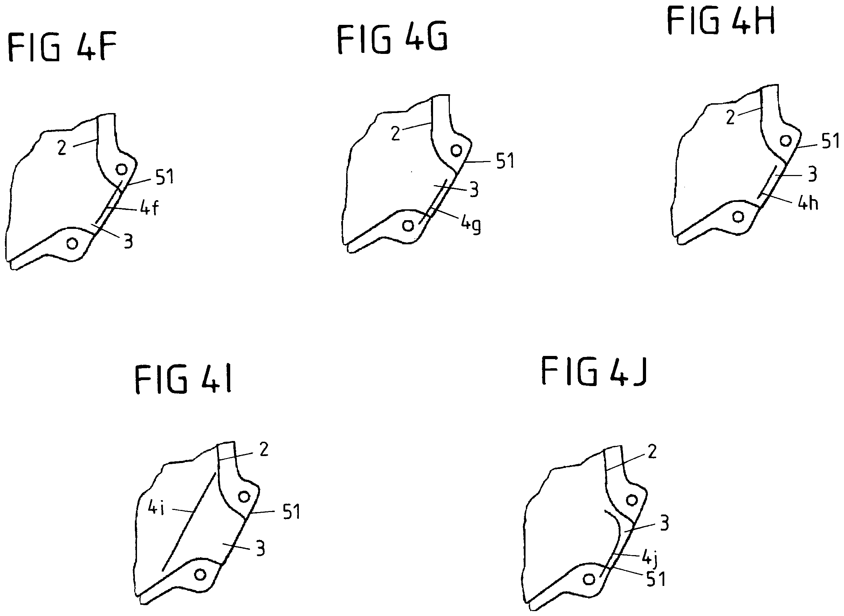

Bei den Figuren 4F, 4G und 4H sind Zusatznähte 4f, 4g, 4h vorgesehen, die ähnlich wie bei der Figur 4B geradlinig angrenzend an die Außenkante 51 des Gassacks und parallel zu dieser verlaufend angeordnet sind. Der Verschluss der Ausströmöffnung 3 erfolgt jedoch nicht vollständig, sondern nur teilweise. Dementsprechend schneidet die Zusatznaht die Umfangsnaht 2 lediglich in einem oberen Punkt (Figur 4F), in einem unteren Punkt (Figur 4G) oder überhaupt nicht (Figur 4H).

Bei der Figur 4I ist die geradlinig verlaufende Zusatznaht 4i stärker von der Außenkante 51 des Gassacks beabstandet. Auch hier befindet sich zwischen den Enden der Zusatznaht 4i und der Umfangsnaht 2 ein Abstand, so dass die Ausströmöffnung 3 nur teilweise verschlossen ist.

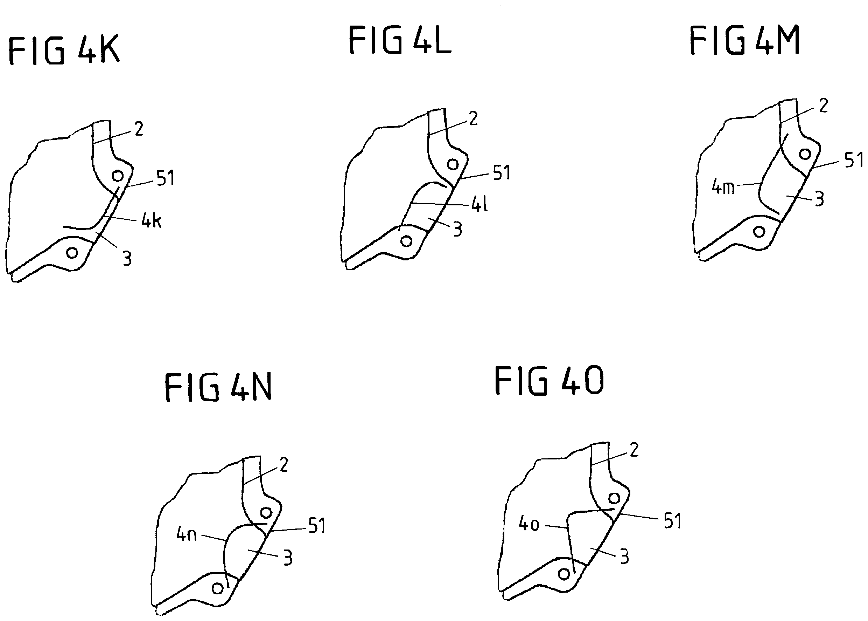

Bei den Figuren 4J, 4K, 4L und 4M ist die Umfangsnaht 4j, 4k, 4l, 4m jeweils aus einem geraden Abschnitt und einem gebogenen Abschnitt gebildet, wobei der geradlinige Abschnitt die Umfangsnaht 2 in einem Punkt schneidet und der gebogene Abschnitt im Bereich der Ausströmöffnung 3 endet. Die Ausströmöffnung 3 ist somit wiederum nur teilweise verschlossen. Über die Orientierung des gebogenen Abschnitts kann der Widerstand eingestellt werden, den die Zusatznaht dem ausströmenden Gas entgegenstellt, und damit auch der Zeitpunkt beeinflusst werden, zu dem die Zusatznaht reißt.

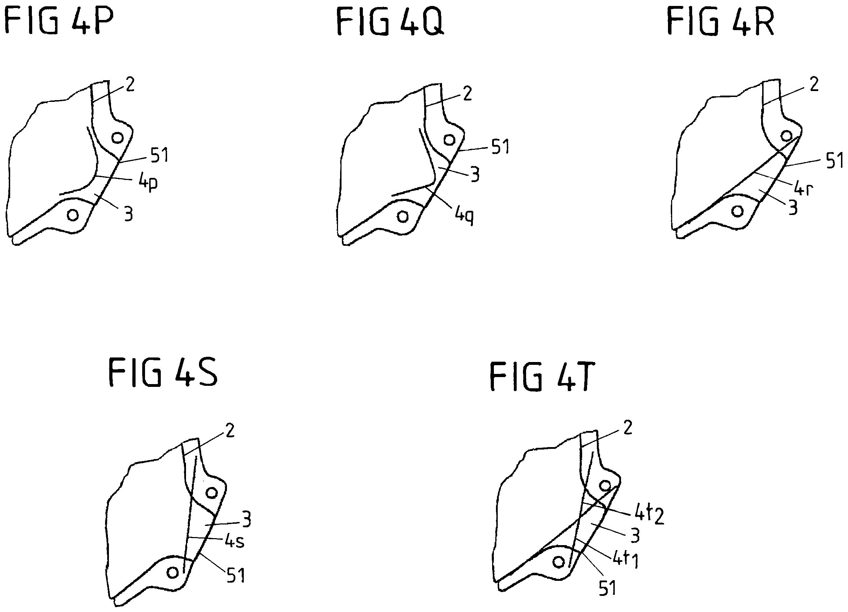

In den Figuren 4N, 4O, 4P und 4Q befinden sich Umfangsnähte 4n, 4o, 4p und 4q, die U-förmig oder V-förmig ausgebildet sind, wobei der mittlere Bereich des "V" oder "U" dem Gassackinneren zugewandt (Figuren 4M, 4O) oder abgewandt (Figuren 4P, 4Q) ist. Die Art der Orientierung stellt wiederum einen Öffnungsparameter dar.

Bei den Figuren 4R und 4S sind wieder geradlinig ausgebildete Zusatznähte 4r, 4s vorgesehen, die die Ausströmöffnung 3 vollständig verschließen, die sich jedoch bei dieser Ausgestaltung nicht parallel zur Außenkante 51 des Gassacks erstrecken, sondern winklig dazu.

In der Figur 4T sind zwei gekreuzte, jeweils geradlinig verlaufende Zusatznähte 4t₁, 4t₂ vorgesehen, die entsprechend den Nähten 4r, 4s der Figuren 4R, 4S verlaufen.

Die in den Figuren 4A bis 4T dargestellten Zusatznähte können auch in beliebiger Kombination realisiert werden, wie anhand der Figur 4T beispielhaft dargestellt.

Die Erfindung beschränkt sich in ihrer Ausführung nicht auf die beschriebenen Ausführungsbeispiele, die lediglich beispielhaft zu verstehen sind. Beispielsweise kann die Art der Unterbrechung der Umfangsnaht zur Ausbildung einer Ausströmöffnung in anderer Weise erfolgen. Auch ist die vorliegende Erfindung nicht beschränkt auf bestimmte Arten von Gassäcken. Die erfindungsgemäße Lösung kann beispielsweise bei 1-Kammer Thorax Seitenairbags, 1-Kammer Becken Thorax Seitenairbags, 1-Kammer Kopf Thorax Seitenairbags, 2-Kammer Becken Thorax Seitenairbags, 2-Kammer Kopf Thorax Seitenairbags, Mehrkammer Kopf Thorax Becken Seitenairbags, Kopfairbags, Fahrerairbags, Beifahrerairbags, Knieairbags sowie allgemein bei Airbags eingesetzt werden, die bei einem Seitenaufprall den der Seite des Aufpralls abgewandt sitzenden Insassen schützen (sogenannte "Far-Side" Airbags).

## Patentansprüche

1. Fahrzeuginsassen-Rückhaltesystem mit
- einem mit Gas aufblasbaren Gassack (1), der mindestens eine erste Gewebelage und eine zweite Gewebelage aufweist, die entlang ihres Randes (5) mittels einer Umfangsnaht (2) miteinander verbunden sind, und
- mit mindestens einer Ausströmöffnung (3), über die Gas aus dem Gassack (1) ausströmen kann, wobei
- die Ausströmöffnung (3) durch eine Unterbrechung der Umfangsnaht (2) gebildet ist, und
- die Umfangsnaht (2) zur Bildung einer Ausströmöffnung (3) derart unterbrochen ist, dass sie auf beiden Seiten der Ausströmöffnung (3) einen sich im wesentlichen senkrecht zum angrenzenden Rand (51) des Gassacks (1) erstreckenden Abschnitt (21, 22) ausbildet und jeweils am Rand (51) des Gassacks (1) endet,
**gekennzeichnet durch**
mindestens eine im Bereich der Ausströmöffnung (3) ausgebildete Zusatznaht (4b), die die Ausströmöffnung (3) vollständig verschließt, wobei die Zusatznaht (4b) derart ausgestaltet ist, dass sie während des Aufblasvorgangs öffnet, und wobei die Zusatznaht (4b) über ihre gesamte Länge gradlinig verläuft und die sich senkrecht erstreckenden Abschnitte der Umfangsnaht (2) schneidet.

2. Fahrzeuginsassen-Rückhaltesystem nach Anspruch 1, **dadurch gekennzeichnet, dass** die Zusatznaht (4b) derart ausgestaltet ist, dass sie die Ausströmöffnung (3) bis zum Erreichen einer während eines Aufblasvorgangs eintretenden Bedingung verschließt.

3. Fahrzeuginsassen-Rückhaltesystem nach Anspruch 1 oder 2, **dadurch gekennzeichnet, dass** die Zusatznaht (4b) derart ausgestaltet ist, dass sie öffnet, bevor ein rückzuhaltender Fahrzeuginsasse in Kontakt mit dem Gassack tritt.

4. Fahrzeuginsassen-Rückhaltesystem nach einem der vorangehenden Ansprüche, **dadurch gekennzeichnet, dass** die Ausströmöffnung (3) derart in der Umfangsnaht (2) des Gassacks angeordnet ist, dass sie nicht verschlossen wird durch Kontakt des Gassacks mit einem rückzuhaltenden Fahrzeuginsassen oder mit intrudierenden Fahrzeugkomponenten.

5. Fahrzeuginsassen-Rückhaltesystem nach Anspruch 4, **dadurch gekennzeichnet, dass** die Ausströmöffnung (3) bei einem als Seitengassack ausgebildeten Gassack an einem in Bezug auf die Fahrzeugrichtung vorderen Bereich des Gassack ausgebildet ist.

6. Fahrzeuginsassen-Rückhaltesystem nach einem der vorangehenden Ansprüche, **dadurch gekennzeichnet, dass** im Bereich der Ausströmöffnung (3) mindestens eine Zusatznaht (4b) angeordnet ist, die im wesentlichen parallel zur Außenkontur (51) des Gassacks im Bereich der Ausströmöffnung (3) verläuft.

7. Fahrzeuginsassen-Rückhaltesystem nach einem der vorangehenden Ansprüche, **dadurch gekennzeichnet, dass** die Außenkontur (5, 51) des Gassacks im Bereich der Ausströmöffnung (3) im wesentlichen stetig ist.

8. Fahrzeuginsassen-Rückhaltesystem nach einem der vorangehenden Ansprüche, **dadurch gekennzeichnet, dass** die Außenkontur (5, 51) des Gassacks im Bereich der Ausströmöffnung (3) im wesentlichen geradlinig ist

9. Fahrzeuginsassen-Rückhaltesystem nach Anspruch 7 oder 8, **dadurch gekennzeichnet, dass** die Außenkante (51) des Gassacks im Bereich der Ausströmöffnung (3) keine Aussparungen oder Einbuchtungen aufweist.

10. Fahrzeuginsassen-Rückhaltesystem nach einem der vorangehenden Ansprüche, **dadurch gekennzeichnet, dass** die Ausströmöffnung (3) im aufgeblasenen Zustand des Gassacks einen im wesentlichen zylindrischen Bereich bildet.

11. Fahrzeuginsassen-Rückhaltesystem nach einem der vorangehenden Ansprüche, **dadurch gekennzeichnet, dass** die Festigkeit der Zusatznaht (4b) in dem Sinne an eine OOP-Situation angepasst ist, dass die Zusatznaht (4b) öffnet, bevor der Innendruck im Gassack OOP-kritisch wird.

## Claims

1. A vehicle occupant restraint system comprising
- a gas bag (1) inflatable with gas, which includes at least one first fabric layer and one second fabric layer, which are connected with each other along their edge (2) by means of a peripheral seam (2), and
- at least one outflow opening (3) via which gas can flow out of the gas bag (1), wherein
- the outflow opening (3) is formed by an interruption of the peripheral seam (2), and
- for forming an outflow opening (3) the peripheral seam (2) is interrupted such that it forms a portion (21, 22) extending substantially vertical to the adjoining edge (51) of the gas bag (1) on both sides of the outflow opening (3) and each ends at the edge (51) of the gas bag (1),
**characterized by**
at least one additional seam (4b) formed in the region of the outflow opening (3), which completely closes the outflow opening (3), wherein the additional seam (4b) is designed such that it opens during the inflation process, and wherein the additional seam (4b) extends linearly along its entire length and intersects the vertical extending portions of the peripheral seam (2).

2. The vehicle occupant restraint system according to claim 1, **characterized in that** the additional seam (4b) is designed such that it closes the outflow opening (3) until reaching a condition which occurs during an inflation process.

3. The vehicle occupant restraint system according to claim 1 or 2, **characterized in that** the additional seam (4b) is designed such that it opens before a vehicle occupant to be restrained comes into contact with the gas bag.

4. The vehicle occupant restraint system according to any of the preceding claims, **characterized in that** the outflow opening (3) is arranged in the peripheral seam (2) of the gas bag such that it is not closed by contact of the gas bag with a vehicle occupant to be restrained or with intruding vehicle components.

5. The vehicle occupant restraint system according to claim 4, **characterized in that** in a gas bag formed as side gas bag the outflow opening (3) is formed at a front region of the gas bag with respect to the vehicle direction.

6. The vehicle occupant restraint system according to any of the preceding claims, **characterized in that** in the region of the outflow opening (3) at least one additional seam (4b) is arranged, which extends substantially parallel to the outer contour (51) of the gas bag in the region of the outflow opening (3).

7. The vehicle occupant restraint system according to any of the preceding claims, **characterized in that** the outer contour (5, 51) of the gas bag is substantially continuous in the region of the outflow opening (3).

8. The vehicle occupant restraint system according to any of the preceding claims, **characterized in that** the outer contour (5, 51) of the gas bag is substantially linear in the region of the outflow opening (3).

9. The vehicle occupant restraint system according to claim 7 or 8, **characterized in that** the outer edge (51) of the gas bag has no recesses or indentations in the region of the outflow opening (3).

10. The vehicle occupant restraint system according to any of the preceding claims, **characterized in that** in the inflated condition of the gas bag the outflow opening (3) forms a substantially cylindrical region.

11. The vehicle occupant restraint system according to any of the preceding claims, **characterized in that** the strength of the additional seam (4b) is adapted to an OOP situation in the sense that the additional seam (4b) opens before the internal pressure in the gas bag becomes OOP-critical.

## Revendications

1. Système de retenue des occupants d'un véhicule, avec
- un coussin gonflable (1) pouvant être gonflé avec un gaz, qui présente au moins une première couche de tissu et une deuxième couche de tissu, qui sont assemblées l'une à l'autre le long de leur bord (5) au moyen d'une couture périphérique (2), et
- avec au moins une ouverture d'échappement (3), par laquelle du gaz peut s'échapper hors du coussin gonflable (1), dans lequel
- l'ouverture d'échappement (3) est formée par une interruption de la couture périphérique (2), et
- la couture périphérique (2) est interrompue pour former une ouverture d'échappement (3), de telle manière qu'elle forme sur les deux côtés de l'ouverture d'échappement (3) une partie (21, 22) s'étendant essentiellement perpendiculairement au bord voisin (51) du coussin gonflable (1) et se termine respectivement au bord (51) du coussin gonflable (1),
**caractérisé par**
au moins une couture supplémentaire (4b) formée dans la région de l'ouverture d'échappement (3), qui ferme entièrement l'ouverture d'échappement (3), dans lequel la couture supplémentaire (4b) est configurée de telle manière qu'elle s'ouvre pendant l'opération de gonflage, et dans lequel la couture supplémentaire (4b) s'étend en ligne droite sur toute sa longueur et coupe les parties de la couture périphérique (2) s'étendant perpendiculairement.

2. Système de retenue des occupants d'un véhicule selon la revendication 1, **caractérisé en ce que** la couture supplémentaire (4b) est configurée de telle manière qu'elle ferme l'ouverture d'échappement (3) jusqu'à atteindre une condition se produisant pendant une opération de gonflage.

3. Système de retenue des occupants d'un véhicule selon la revendication 1 ou 2, **caractérisé en ce que** la couture supplémentaire (4b) est configurée de telle manière qu'elle s'ouvre, avant qu'un occupant du véhicule à retenir entre en contact avec le coussin gonflable.

4. Système de retenue des occupants d'un véhicule selon l'une quelconque des revendications précédentes, **caractérisé en ce que** l'ouverture d'échappement (3) est disposée dans la couture périphérique (2) du coussin gonflable, de telle manière qu'elle ne soit pas fermée par contact du coussin gonflable avec un occupant du véhicule à retenir ou avec des composants intrusifs du véhicule.

5. Système de retenue des occupants d'un véhicule selon la revendication 4, **caractérisé en ce que**, dans le cas d'un coussin gonflable formant un coussin gonflable latéral, l'ouverture d'échappement (3) est formée sur une région avant du coussin gonflable par rapport à la direction du véhicule.

6. Système de retenue des occupants d'un véhicule selon l'une quelconque des revendications précédentes, **caractérisé en ce qu'**au moins une couture supplémentaire (4b) est disposée dans la région de l'ouverture d'échappement (3) et s'étend essentiellement parallèlement au contour extérieur (51) du coussin gonflable dans la région de l'ouverture d'échappement (3).

7. Système de retenue des occupants d'un véhicule selon l'une quelconque des revendications précédentes, **caractérisé en ce que** le contour extérieur (5, 51) du coussin gonflable est essentiellement stable dans la région de l'ouverture d'échappement (3).

8. Système de retenue des occupants d'un véhicule selon l'une quelconque des revendications précédentes, **caractérisé en ce que** le contour extérieur (5, 51) du coussin gonflable est essentiellement rectiligne dans la région de l'ouverture d'échappement (3).

9. Système de retenue des occupants d'un véhicule selon la revendication 7 ou 8, **caractérisé en ce que** le bord extérieur (51) du coussin gonflable ne présente pas de découpes ou de renflements dans la région de l'ouverture d'échappement (3).

10. Système de retenue des occupants d'un véhicule selon l'une quelconque des revendications précédentes, **caractérisé en ce que** l'ouverture d'échappement (3) forme dans l'état gonflé du coussin gonflable une région essentiellement cylindrique.

11. Système de retenue des occupants d'un véhicule selon l'une quelconque des revendications précédentes, **caractérisé en ce que** la résistance de la couture supplémentaire (4b) est adaptée à une situation OOP, dans le sens où la couture supplémentaire (4b) s'ouvre, avant que la pression intérieure dans le coussin gonflable devienne critique OOP.
